# EUROPÄISCHE PATENTANMELDUNG

(11) **EP 4 434 718 A2**
(43) Veröffentlichungstag der Anmeldung: **25.09.2024**
(21) Anmeldenummer: 24160980.9
(22) Anmeldetag: 01.03.2024
(51) Int. Cl.: B29C 49/68, B29C 49/78, B29C 49/12, B29C 49/06, B29C 49/36, B29C 49/42, B29L 31/00

(54) **VORRICHTUNG UND VERFAHREN ZUM ERWÄRMEN VON KUNSTSTOFFVORFORMLINGEN MIT INSPEKTION DER HALTEEINRICHTUNGEN**

(30) Priorität: 20.03.2023 DE 102023106894
(71) Anmelder: Krones AG, 93073 Neutraubling (DE)
(72) Erfinder: Eifler, Michael, 93073 Neutraubling (DE)
(74) Vertreter: Bittner, Bernhard

(57) **Zusammenfassung**

Vorrichtung (1) zum Erwärmen von Kunststoffvorformlingen (10) mit einer Transporteinrichtung (2), welche die Kunststoffvorformlinge entlang eines vorgegebenen Transportpfads (T) transportiert, wobei die Transporteinrichtung ein umlaufendes Transportmittel (20) aufweist, an dem eine Vielzahl von Halteeinrichtungen (22) zum Halten der zu erwärmenden Kunststoffvorformlinge (10) angeordnet ist, dadurch gekennzeichnet, dass die Vorrichtung (1) eine Inspektionseinrichtung (4) aufweist, welche dazu geeignet und bestimmt ist, nicht mit Kunststoffvorformlingen bestückte Halteeinrichtungen (22) zu inspizieren.

## Beschreibung

Die vorliegende Erfindung bezieht sich auf eine Erwärmungseinrichtung und insbesondere einen Ofen zum Erwärmen von Kunststoffvorformlingen. Im Stand der Technik ist es bekannt, dass Kunststoffvorformlinge zunächst in einem Ofen erwärmt werden und anschließend mittels einer Blasmaschine, insbesondere einer Streckblasmaschine zu Kunststoffbehältnissen, insbesondere Kunststoffflaschen expandiert werden. Dabei sind unterschiedliche Öfen bekannt. So sind beispielsweise Infrarotöfen bekannt, welche eine Transporteinrichtung wie eine Transportkette aufweisen, welche die zu erwärmenden Kunststoffvorformlinge durch eine Heizgasse fördert. Zu diesem Zweck sind dabei Halteeinrichtungen zum Halten der Kunststoffvorformlinge vorgesehen, welche wiederum an der Transportkette angeordnet sind.

So sind bei einer speziellen Ausgestaltung Heizspindeln (auch als Haltedorne bezeichnet) vorgesehen, an denen die Kunststoffvorformlinge hängen. Derartige Öfen weisen dabei eine große Anzahl von derartigen Halteeinrichtungen, insbesondere Heizspindeln auf. So können in derartigen Öfen beispielsweise zwischen 160 und 500 solcher Heizspindeln vorgesehen sein, welche die Kunststoffvorformlinge während des Heizvorgangs halten. Da sich die Heizspindel mit dem Kunststoffvorformling dabei teilweise dreht, ist der Rundlauf möglichst exakt einzuhalten. Durch Kollisionen oder unsachgemäßen Umbau können diese Spindeln sich jedoch verbiegen, was zu einer ungleichmäßigen Bewegung der Kunststoffvorformlinge führt.

Durch Heizspindeln, die nicht mehr exakt sauber und rund laufen, kann es zu ungleichmäßig erwärmten Kunststoffvorformlingen kommen. Speziell bei sehr leichten Kunststoffvorformlingen kommt dies stärker zum Tragen und die Behältnisse werden ungleichmäßig geblasen oder platzen sogar.

Auch für das sogenannte Preferential Heating, bei dem die Kunststoffvorformlinge an ihrem Umfang ungleichmäßig erwärmt werden, kann dies das Temperaturprofil an dem Kunststoffvorformling empfindlich stören.

Der vorliegenden Erfindung liegt daher die Aufgabe zugrunde, einen verbesserten Transport der Kunststoffvorformlinge und eine gleichmäßigere Erwärmung zu ermöglichen. Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche die Kunststoffvorformlinge entlang eines vorgegebenen Transportpfads transportiert. Dabei weist die Transporteinrichtung ein umlaufendes Transportmittel auf, an dem eine Vielzahl von Halteeinrichtungen zum Halten der zu erwärmenden Kunststoffvorformlinge angeordnet ist.

Erfindungsgemäß weist die Vorrichtung eine Inspektionseinrichtung auf, welche dazu geeignet und bestimmt ist, nicht mit Kunststoffvorformlingen bestückte Halteeinrichtungen zu inspizieren.

Es wird daher eine Inspektion, bevorzugt innerhalb des Ofens, vorgeschlagen, mit der insbesondere die Lage und/oder eine Ausrichtung der Halteeinrichtungen bestimmt werden soll. Vorteilhaft weist die Vorrichtung wenigstens eine Erwärmungseinrichtung und bevorzugt eine Vielzahl von Erwärmungseinrichtungen auf.

Bei diesen Erwärmungseinrichtungen kann es sich beispielsweise um Heizkästen handeln, die entlang des Transportpfads der Kunststoffvorformlinge angeordnet sind. Besonders bevorzugt sind diese Erwärmungseinrichtungen stationär angeordnet. Insbesondere handelt es sich dabei um sogenannte Heizkästen.

Besonders bevorzugt weisen die Erwärmungseinrichtungen jeweils Bestrahlungseinrichtungen wie beispielsweise Halogenlampen oder dergleichen auf, welche die Kunststoffvorformlinge mit infraroter Strahlung beaufschlagen.

Besonders bevorzugt sind diese Erwärmungseinrichtungen auf einer Seite des Transportpfades angeordnet. Besonders bevorzugt sind auf der gegenüberliegenden Seite Reflektoreinrichtungen angeordnet, welche die erwärmende Strahlung reflektieren. Auf diese Weise weist die Vorrichtung wenigstens eine Heizgasse auf, durch welche die Kunststoffvorformlingen transportiert werden.

Bevorzugt ist dabei diese wenigstens eine Heizgasse derart ausgeführt, dass die Kunststoffvorformlinge vereinzelt und bevorzugt einreihig durch diese hindurch transportierbar sind. Bevorzugt weist die Heizgasse eine Breite auf, welche geringer ist als der sechsfache Durchmesser eines Grundkörpers der Kunststoffvorformlinge, bevorzugt geringer als das fünffache, bevorzugt geringer als das vierfache dieses Durchmessers.

Bevorzugt handelt es sich bei der die Kunststoffvorformlinge erwärmende Strahlung um Infrarotstrahlung.

Bei einer bevorzugten Ausführungsform handelt es sich bei dem Transportmittel um ein Transportband oder eine Transportkette. Weiterhin sind bevorzugt Abschirmeinrichtungen vorgesehen, welche eine Wärmeabschirmung der Mündungen der Kunststoffvorformlinge bewirken. So können die einzelnen Halteeinrichtungen derartige Wärmeabschirmplatten aufweisen.

Bei einer bevorzugten Ausführungsform erlauben die Halteeinrichtungen einen vereinzelten Transport der Kunststoffvorformlinge. Besonders bevorzugt sind die Halteeinrichtungen, insbesondere mit den darin angeordneten Kunststoffvorformlingen, um ihre Längsachse drehbar. Auf diese Weise werden auch die Kunststoffvorformlinge, insbesondere auch während ihrer Erwärmung um ihre Längsrichtung gedreht. Auf diese Weise wird eine gleichmäßige Erwärmung der Kunststoffvorformlinge in der Umfangsrichtung der Kunststoffvorformlinge erreicht.

Bei einer bevorzugten Ausführungsform weist der Transportpfad der Kunststoffvorformlinge wenigstens einen und bevorzugt zwei geradlinige Abschnitte auf. Bevorzugt sind diese geradlinigen Abschnitte durch einen Umlenkbereich verbunden, in dem die Bewegungsrichtung der Kunststoffvorformlinge umgekehrt wird.

Besonders bevorzugt weist die Inspektionseinrichtung eine Bildaufnahmeeinrichtung auf, welche dazu geeignet und bestimmt ist, ortsaufgelöste Bilder der Halteeinrichtungen aufzunehmen. Bevorzugt ist die Inspektionseinrichtung dazu geeignet und bestimmt, die Halteeinrichtungen berührungslos zu inspizieren.

Bevorzugt ist eine Vergleichseinrichtung vorgesehen, welche die aufgenommenen Bilder mit Referenzbildern vergleicht, insbesondere um festzustellen, ob die Halteeinrichtungen zentrisch oder exzentrisch angeordnet sind und/oder verlaufen.

Dabei ist es möglich, dass die Bildaufnahmeeinrichtung ein Bild der Halteeinrichtungen aufnimmt, um festzustellen, ob eine Exzentrizität vorliegt. Es wäre jedoch auch möglich, zwei Bilder mit unterschiedlichen Drehstellungen der Halteeinrichtungen aufzunehmen, beispielsweise zwei Bilder, in denen die Halteeinrichtungen um 180° verdreht sind, um so leichter die besagte Exzentrizität feststellen zu können.

Dabei ist es möglich, dass zur Auswertung einer Exzentrizität auf bestimmte Referenzpunkte des Bildes Bezug genommen wird, beispielsweise an einer Sechskantschraube, die sich im Zentrum der Haltevorrichtung befinden kann.

Besonders bevorzugt weist die Halteeinrichtung ein umlaufendes flexibles Element, beispielsweise in Form eines O-Rings, auf.

Bei einer bevorzugten Ausführungsform ist die Inspektionseinrichtung und insbesondere die Bildaufnahmeeinrichtung unterhalb der Halteeinrichtungen angeordnet. Besonders bevorzugt nimmt daher die Bildaufnahmeeinrichtung in einer vertikalen nach oben gerichteten Richtung ein Bild auf bzw. ist in dieser Richtung ausgerichtet.

Besonders bevorzugt weist die Inspektionseinrichtung zu den Halteeinrichtungen einen Abstand auf der größer ist als 8cm, bevorzugt größer als 10cm und besonders bevorzugt größer als 12cm. Besonders bevorzugt weist die Inspektionseinrichtung zu den Halteeinrichtungen einen Abstand auf, der kleiner ist als 30cm, bevorzugt kleiner als 20cm.

Bei einer weiteren bevorzugten Ausführungsform ist die Inspektionseinrichtung in einer Längsrichtung der Kunststoffvorformlinge bewegbar und/oder verstellbar. Auf diese Weise ist es einfacher möglich, die gleiche Inspektionseinrichtung sowohl zur Inspektion der Halteeinrichtung als auch (insbesondere in einem Arbeitsbetrieb) zur Inspektion der Kunststoffvorformlinge zu verwenden.

Bevorzugt erfolgt dabei das Inspizieren der Halteeinrichtungen in einer Zustandskontrollfahrt und das Inspizieren der Kunststoffvorformlinge in einer Produktionsfahrt, wobei sich die Zustandskontrollfahrt von der Produktionsfahrt unterscheidet. In der Zustandskontrollfahrt sind im Vergleich zur Produktionsfahr beispielsweise keine Vorformlinge in der Erwärmungseinrichtung vorhanden und die Erwärmungseinrichtung wird gegebenenfalls mit reduzierter Transportgeschwindigkeit betrieben.

Während der Produktion bzw. der Produktionsfahrt wird die Inspektionseinrichtung demnach bevorzugt für das Inspizieren der Kunststoffvorformlinge verwendet und in der Zustandskontrollfahrt wird die gleiche Inspektionseinrichtung für das Inspizieren der Halteeinrichtungen verwendet. Dabei kann die Inspektionseinrichtung bevorzugt in Richtung der Halteeinrichtung bewegbar ausgebildet sein. Dieses Bewegen der Halteeinrichtung kann bevorzugt automatisch erfolgen, wobei die Position in einem Rezept hinterlegt sein kann.

Bei einer weiteren vorteilhaften Ausführungsform sind die Halteeinrichtungen Haltevorsprünge und bevorzugt Haltedorne, welche in die Mündungen der Kunststoffvorformlinge einführbar sind, um diese so zu halten. Besonders bevorzugt weisen die Halteeinrichtungen Klemmmittel auf, welche dazu geeignet und bestimmt sind, die Kunststoffvorformlinge an den Halteinrichtungen zu halten.

Bevorzugt handelt es sich bei den Halteeinrichtungen um Heizdorne oder Greifeinrichtungen. Die Heizdorne sind dabei bevorzugt in die Mündungen der Kunststoffvorformlinge einführbar. Die Greifeinrichtungen bestehen dagegen bevorzugt aus mindestens zwei relativ zueinander beweglichen Greifelementen, welchen den Kunststoffvorformling an einem Außenumfang, bevorzugt ober- oder unterhalb des Tragrings, greifen.

Bevorzugt wird mittels einer Kamera eine leere (d.h. eine nicht mit einem Kunststoffvorformlinge besetzte) Spindel bzw. Halteeinrichtung von unten aufgenommen und bevorzugt wird die Kontur oder Fläche der Spindel und/oder der Halteeinrichtung wird - gegenüber einer Referenzposition - auf Konzentrizität geprüft.

Hierbei ist es möglich, dies beispielsweise im Produktionslücken oder beim Anfahren der Maschine durchzuführen, sodass die Verfügbarkeit der Halteeinrichtung hierdurch nicht beeinträchtigt wird.

Als Kamera kann beispielsweise bestehende Hardware genutzt werden oder auch zusätzliche Hardware installiert werden. Infrage kommt beispielsweise, die Kamera zu verwenden, die auch bei der Gateinspektion verwendet wird, oder auch die Kamera für die Mündungserkennung im Preferential Heating (PH) Prozess.

Daneben kann auch eine Kamera verwendet werden, welche von unten auf das Transportmittel bzw. die Ofenkette gerichtet ist.

Bei einer weiteren bevorzugten Ausführungsform ist daher die Inspektionseinrichtung dazu geeignet und bestimmt, eine Konzentrizität der Halteeinrichtungen zu erfassen. Besonders bevorzugt ist die Inspektionseinrichtung auch dazu geeignet und bestimmt, ein Maß der einer Exzentrizität zu erfassen.

Bevorzugt ist die Inspektionseinrichtung dazu geeignet, einen für eine Konzentrizität charakteristischen Wert der Halteeinrichtung zu erfassen. Im Anschluss wird der erfasste charakteristische Wert bevorzugt mit einem SOLL-Wert verglichen, wobei bei einer Abweichung des charakteristischen Werts von dem SOLL-Wert ein Signal und/oder eine Handlungsempfehlung ausgegeben wird. Der SOLL-Wert kann dabei bevorzugt ein fester Wert sein, aber auch ein Grenzbereich sein. Denkbar wäre beispielsweise eine Abweichung vom SOLL-Wert bis zu ± 2 mm, bevorzugt ± 1,5 mm und besonders bevorzugt ± 1 mm.

Es wäre bevorzugt auch denkbar, dass auf Basis der gewonnenen Informationen Wartungsintervalle neu angepasst werden (Cloud; Big Data). Die gewonnenen Daten werden dabei beispielsweise in einer Speichereinrichtung gesammelt und gespeichert. Bevorzugt wird dabei aus den gewonnenen Daten ein neues Wartungsintervall berechnet, wobei die gewonnenen Daten und das neue Wartungsintervall über die Cloud auch mit anderen Maschinen geteilt werden können. Bevorzugt können diese Daten auch dazu verwendet werden, eine statistische Auswertung vorzunehmen. (z.B. um festzustellen wie sich eine Streuung verändert).

Bei einer weiteren vorteilhaften Ausführungsform ist die Inspektionseinrichtung in einem Umlenkbereich der Transporteinrichtung angeordnet, in dem eine Bewegungsrichtung der Kunststoffvorformlinge umgekehrt wird. Die Anordnung in diesem Bereich hat den Vorteil, dass in diesem Bereich die Halteeinrichtungen weiter voneinander beabstandet sind als in den jeweiligen geradlinigen Abschnitten. Alternativ ist es möglich die Inspektionseinrichtung in Einlaufbereich der Vorrichtung anzuordnen, in dem die Kunststoffvorformlinge dem Erwärmungsprozess zugeführt werden.

Es wäre auch möglich, dass sich die Inspektionseinrichtung, beispielsweise in Form einer Kamera an einer Position einer Erwärmungseinheit befindet, beispielsweise in einer unbestückten Heizkastenposition. In dieser Ausgestaltung wäre die Inspektionseinrichtung in dem Ofen selbst, bevorzugt mitten im Ofen angeordnet. Der Hintergrund ist die denkbare Option, die Kameraerkennung für die Tragringmarkierungen bei einer Preferential Heating Maschine zwischen der normalen und der Preferential Heating Heizzone (beispielsweise etwa auf halbem Weg auf der Ofenrückseite) zu platzieren. Diese Kamera könnte mitbenutzt werden um die Spindeln zu kontrollieren.

Bei einer weiteren vorteilhaften Ausführungsform weist die Vorrichtung eine Zuordnungseinrichtung auf, welche ein von einer Bildaufnahmeeinrichtung aufgenommenes Bild genau einer bestimmten Halteeinrichtung zuordnet.

So kann beispielsweise festgestellt werden, dass ein bestimmtes Bild einer 70. Halteeinrichtung zuzuordnen ist. Idealerweise ist daher der Vorrichtung die Nummer der erkannten Spindel bzw. der erkannten Halteeinrichtung bekannt. Auf diese Weise kann diese Nummer an einen Benutzer gemeldet werden. Durch eine Messung der Auslenkung der Halteeinrichtung bzw. der Spindel ist bevorzugt auch eine Unterteilung in mehr oder weniger kritische Abweichungen eines Rundlaufs denkbar. Bei starken Reflexionen am Metall ist eine Beschichtung der Greifer denkbar, wobei, wie unten genau beschrieben wird der entsprechende Bereich bevorzugt nicht in Kontakt mit den Kunststoffvorformlingen ist.

Bevorzugt weisen daher die Halteeinrichtungen eine Beschichtung zur Verbesserung einer Bildaufnahme auf. Besonders bevorzugt weisen die Halteeinrichtungen eine Beschichtung in einem Bereich auf, in dem sie von der Bildaufnahmeeinrichtung inspiziert und/oder beobachtet werden. Besonders bevorzugt weisen die Halteeinrichtungen eine stirnseitige Beschichtung auf. Bei dieser Beschichtung kann es sich beispielsweise um eine Antireflexbeschichtung handeln. Es könnte sich jedoch auch umgekehrt um eine stark reflektierende Beschichtung handeln.

Besonders bevorzugt, handelt es sich bei der Beschichtung um eine Mattbeschichtung, insbesondere an der Unterseite. Besonders bevorzugt kommt diese Beschichtung nicht in Kontakt mit den Kunststoffvorformlingen.

Bei einer weiteren bevorzugen Ausführungsform weisen die Halteeinrichtungen, insbesondere in einem von der Bildaufnahmeeinrichtung erfassbaren Bereich eine Markierung auf. Anhand dieser Markierung kann eine Prüfung der Konzentrizität erleichtert werden.

Bevorzugt ist die Inspektionseinrichtung dazu geeignet und bestimmt, die Inspektion in einem Auflichtverfahren durchzuführen.

Besonders bevorzugt ist eine Beleuchtungseinrichtung vorgesehen, welche die Halteeinrichtungen, insbesondere zum Zwecke der Bildaufnahme, beleuchtet. Bevorzugt handelt es sich bei der Beleuchtungseinrichtung um eine Blitzlampe.

Die vorliegende Erfindung ist weiterhin auf ein Verfahren zum Erwärmen von Kunststoffvorformlingen gerichtet, wobei eine Transporteinrichtung die Kunststoffvorformlinge entlang eines vorgegebenen Transportpfads transportiert und wobei die Transporteinrichtung ein umlaufendes Transportmittel aufweist, an dem eine Vielzahl von Halteeinrichtungen zum Halten der zu erwärmenden Kunststoffvorformlinge angeordnet ist.

Erfindungsgemäß ist eine Inspektionseinrichtung vorgesehen, welche nicht mit Kunststoffvorformlingen bestückte Halteeinrichtungen inspiziert und bevorzugt einen Wert ausgibt, der für eine Konzentrizität der Halteeinrichtungen (insbesondere gegenüber einer Referenzposition) charakteristisch ist.

So kann beispielsweise die Inspektionseinrichtung ein Bild der Halteeinrichtungen aufnehmen und/oder ausgeben, aus dem sich die Konzentrizität oder auch die Exzentrizität ableiten lassen.

Bevorzugt verläuft diese Inspektion während einer Bewegung der Kunststoffvorformlinge mit einer gegenüber einem Arbeitsbetrieb reduzierten Transportgeschwindigkeit. Dabei ist es möglich, dass die Inspektionseinrichtung Bilder der Halteeinrichtungen während deren Bewegung aufnimmt, es wäre doch auch möglich, dass die einzelnen Halteeinrichtungen angehalten werden, damit ein Bild aufgenommen werden kann. Auch wäre es möglich, dass die Halteeinrichtungen angehalten werden und sich um ihre eigene Achse drehen, sodass mehrere Bilder (in unterschiedlichen Drehstellungen) aufgenommen werden, um so noch besser die Exzentrizität feststellen zu können.

Besonders bevorzugt werden Bilder der Halteeinrichtungen mit einer Zuordnung zu der jeweiligen Halteeinrichtung aufgenommen. So kann beispielsweise einem bestimmten Bild zugeordnet werden, dass dieses von der 70. Spindel oder Halteeinrichtung aufgenommen wurde. Bevorzugt werden diese Zuordnung und das Bild abgespeichert.

Besonders bevorzugt überwacht sich die Vorrichtung selbst. Dabei ist es möglich, dass sich die Vorrichtung permanent selbst überwacht. Es ist dabei möglich, verbogene Halteeinrichtungen schnell zu erkennen und dies auch an einen Benutzer zu melden. Durch die Zuordnung zu Nummer der Spindel bzw. der Halteeinrichtung entfällt die weitere Fehlersuche. Es kann in der Folge die Halteeinrichtung beobachtet, ausgerichtet oder getauscht werden.

Durch die Messung der Änderung gibt die Vorrichtung vor, ob Ersatzteile sofort oder erst in der nächsten Wartungspause verbaut bzw. gewechselt werden müssen. Bei einem bevorzugten Verfahren werden bereits bestehende Inspektionseinrichtungen bzw. Kameras benutzt, sodass kaum oder wenig Hardware seitens des Herstellers nachzuinstallieren ist. Auf diese Weise sind Nachrüstungen einfacher.

Weiterhin ist die vorliegende Erfindung auch auf eine Vorrichtung zur Herstellung von Kunststoffbehältnissen gerichtet, mit einer Umformungseinrichtung, welche ein Blasrad mit einer Vielzahl von Umformungsstationen aufweist, wobei die Umformungsstationen jeweils eine Blasform innerhalb deren Kunststoffvorformlinge zu den Kunststoffbehältnissen umgeformt werden und wenigstens ein Behandlungselement zum Behandeln und insbesondere zum Umformen der Kunststoffvorformlinge aufweisen.

Erfindungsgemäß weist die Vorrichtung eine Inspektionseinrichtung auf, welche dazu geeignet und bestimmt ist das wenigstens eine Behandlungselement der Umformungsstation zu inspizieren.

Es wird demnach auch vorgeschlagen, dass die Vorrichtung zur Herstellung der Kunststoffbehältnisse eine, wie oben beschriebene Inspektionseinrichtung aufweist. Bevorzugt weist dabei sowohl die Vorrichtung zum Erwärmen der Kunststoffvorformlinge als auch die Vorrichtung zum Herstellen der Kunststoffbehältnisse eine derartige Inspektionseinrichtung auf.

Bei einer bevorzugten Ausführungsform ist das wenigstens eine Behandlungselement aus einer Gruppe von Behandlungselementen ausgewählt, welche eine Reckstange, eine Blasdüse, eine Blasform, eine Bodenform und dergleichen enthält.

Bei einer weiteren bevorzugten Ausführungsform inspiziert die Inspektionseinrichtung das Behandlungselement in einem Zustand, in dem die Blasform geöffnet ist. Insbesondere befinden sich dabei Seitenteile der Blasform in einem geöffneten Zustand. Die Inspektion des wenigstens einen Behandlungselements wird demnach bevorzugt durchgeführt, wenn sich kein Kunststoffvorformling oder Kunststoffbehältnis in der Blasform befindet.

Bevorzugt ist die Inspektionseinrichtung dabei dazu geeignet und bestimmt, einen Wert zu ermitteln, der für einen Zustand des Behandlungselements charakteristisch ist. Hierbei kann es sich beispielsweise um einen Wert handeln aus welchen ableitbar ist, ob beispielsweise die Reckstange verbogen ist.

Bevorzugt ist die Inspektionseinrichtung dabei dazu geeignet und bestimmt, einen Wert zu ermitteln, der für einen Typ des Behandlungselements charakteristisch ist. Hierbei kann es sich beispielsweise um einen Wert handeln aus welchen ableitbar ist, ob die richtige Reckstange verbaut wurde.

Besonders bevorzugt ist die Inspektionseinrichtung dabei dazu geeignet und bestimmt, einen Wert zu ermitteln, der für einen Zustand des Behandlungselements und für einen Typ des Behandlungselements charakteristisch ist.

Weitere Vorteile und Ausführungsformen ergeben sich aus den beigefügten Figuren. Darin zeigen:
- Fig. 1: eine schematische Darstellung einer erfindungsgemäßen Vorrichtung;
- Fig. 2: eine Darstellung einer Halteeinrichtung;
- Fig. 3a und: eine Darstellung einer Aufnahme einer ordnungsgemäßen Halteeinrichtung;
- Fig. 3b: eine Darstellung einer Aufnahme einer fehlerhaften Halteeinrichtung.

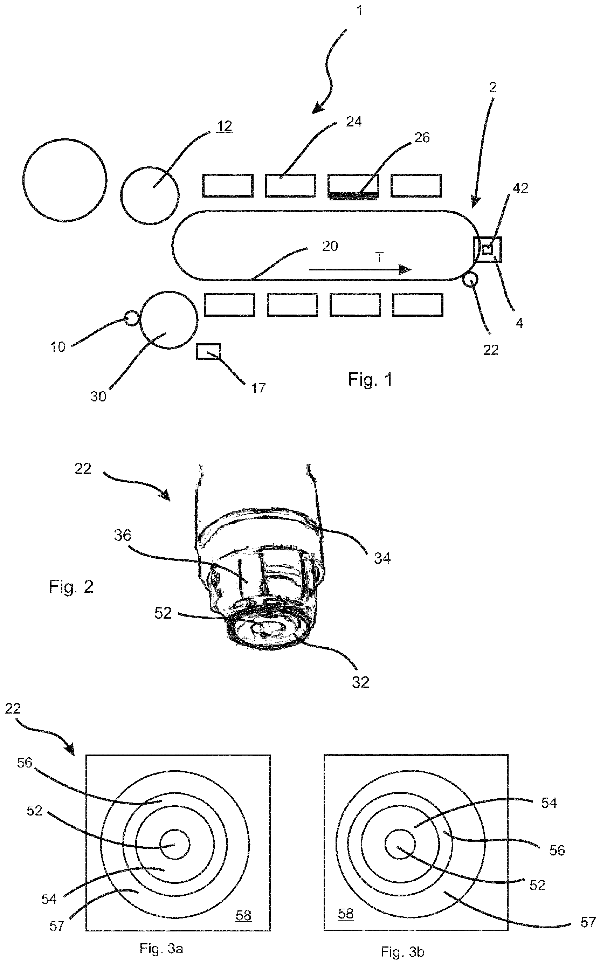

Fig. 1 zeigt eine schematische Darstellung einer erfindungsgemäßen Vorrichtung 1 zum Erwärmen von Kunststoffvorformlingen 1.

Diese Vorrichtung weist eine Vereinzelungseinrichtung wie einen Eintaktstern 30 auf, der die Kunststoffvorformlinge, die mittels einer Zuführeinrichtung 17 in Reihe zugeführt werden vereinzelt und diese vereinzelten Kunststoffvorformlinge 10 einer Transporteinrichtung 2 zuführt.

Die Transporteinrichtung 2 transportiert die Kunststoffvorformlinge 10 entlang eines Transportpfads T. Dieser Transportpfad T weist zwei geradlinige Abschnitte auf, welche durch einen Umlenkbereich verbunden sind.

Das Bezugszeichen 20 bezieht sich auf ein umlaufendes Transportmittel, wie insbesondere eine Transportkette. An diesem Transportmittel ist eine Vielzahl von Halteeinrichtungen 22 zum Halten der Kunststoffvorformlinge angeordnet.

Das Bezugszeichen 24 kennzeichnet eine Heizeinrichtung wie einen Heizkasten, welcher stationär entlang des Transportpfads T angeordnet ist. Diese Heizeinrichtung weist eine Vielzahl von Heizstrahlern 26 auf, welche sich bevorzugt entlang des Transportpfads T erstrecken wobei bevorzugt eine Vielzahl von Heizstrahlern 22 in der Längsrichtung der zu erwärmenden Kunststoffvorformlinge übereinander angeordnet ist.

Das Bezugszeichen 12 kennzeichnet eine weitere Transporteinrichtung, welche die erwärmten Kunststoffvorformlinge 10 abtransportiert.

Das Bezugszeichen 4 kennzeichnet eine Inspektionseinrichtung, welche dazu dient, die nicht mit Kunststoffvorformlingen besetzten Halteeinrichtungen 22 zu inspizieren. Dies kann beispielsweise außerhalb eines Arbeitsbetriebs der Vorrichtung 1 erfolgen, in dem keine Kunststoffvorformlinge an den Halteeinrichtungen 22 angeordnet sind. Diese Inspektionseinrichtung 4 weist bevorzugt eine Bildaufnahmeeinrichtung auf, welche Bilder der Halteeinrichtungen 22 aufnimmt. Bei dieser Bildaufnahmeeinrichtung handelt es sich insbesondere um eine Kamera.

Die Inspektionseinrichtung ist hier in dem Umlenkbereich des Transportpfads T gezeigt, in welchem die Bewegungsrichtung der Kunststoffvorformlinge umgedreht wird.

Zu diesem Zweck ist bevorzugt die Bildaufnahmeeinrichtung 42 unterhalb der Halteeinrichtungen angeordnet. Die Bildaufnahmeeinrichtung könnte jedoch auch seitlich neben des Transportpfads T angeordnet sein und eine Bildaufnahme mit Umlenkmitteln wie etwa Spiegeln ermöglicht werden.

Weiterhin weist bevorzugt die Vorrichtung 1 eine (nicht gezeigte) Zuordnungseinrichtung auf, welche aufgenommenen Bildern jeweils diejenigen Halteeinrichtungen 22, von denen die Bilder aufgenommen wurden, zuordnet.

Fig. 2 zeigt eine Darstellung einer Halteeinrichtung 22. Diese weist eine (untere) Stirnseite 32 auf, welche bevorzugt von der Inspektionseinrichtung inspiziert wird. Das Bezugszeichen 52 kennzeichnet ein Befestigungsmittel, welches bevorzugt die einzelnen Elemente der Halteeinrichtung aneinander befestigt.

Beim Transport der Kunststoffvorformlinge tritt der untere Bereich der Halteeinrichtung 22 in deren Mündungen ein. Das Bezugszeichen 36 kennzeichnet Klemmmittel, wie etwa nach radial nach außen gedrängte Vorsprünge, welche zum Halten der Kunststoffvorformlinge dienen. Das Bezugszeichen 34 kennzeichnet ein flexibles umlaufendes Element, wie einen O-Ring.

Die Fig. 3a und 3b zeigen zwei Aufnahmen einer Halteeinrichtung. Dabei ist jeweils wieder das Befestigungsmittel 52 erkennbar, welches sich im Zentrum der Halteeinrichtung 22 befindet. Das Bezugszeichen 54 kennzeichnet eine Stirnfläche, welche insbesondere zur Beobachtung bzw. Inspektion dient. Diese Stirnfläche kann dabei eine spezielle Beschichtung aufweisen, welche die Beobachtung bzw. Bildauswertung erleichtert.

Das Bezugszeichen 56 kennzeichnet eine Außenwandung der Halteeinrichtung. Bevorzugt sind diese Außenwandung 56, das Befestigungsmittel 52 und die Stirnfläche 54 konzentrisch zueinander. Damit können diese Elemente verwendet werden, um die Konzentrizität zu erfassen oder um eine Exzentrizität zu bestimmen.

Das Bezugszeichen 58 kennzeichnet eine Abschirmplatte, welche dazu dient, eine zu starke Erwärmung der Mündungen der Kunststoffvorformlinge zu vermeiden. Zwischen der Abschirmeinrichtung 58 und der Außenwandung ist ein umlaufender Spalt 57 ausgebildet.

Fig. 3a zeigt eine ordnungsgemäße Halteeinrichtung. Man erkennt, dass hier das Befestigungsmittel, die Stirnfläche 45 und die Außenwandung 56 konzentrisch zu dem umlaufenden Spalt sind. Damit ist hier die Halteeinrichtung konzentrisch ausgerichtet und damit ordnungsgemäß.

Bei der in Fig. 3b gezeigten Halteeinrichtung 22 liegt eine Exzentrizität vor. Die Stirnfläche der Halteeinrichtung 22 ist hier leicht nach links gegenüber ihrer Sollposition versetzt. Damit ist die in Fig. 3b gezeigte Halteeinrichtung 22 fehlerhaft.

Die in den Fig. 3a und 3b aufgenommenen Bildern werden bevorzugt mit Referenzbildern vergleichen, wobei ein solches Referenzbild beispielsweise eine ordnungsgemäße Halteeinrichtung zeigen kann.

Die Vorrichtung 1 weist bevorzugt auch eine Auswerteeinrichtung auf, welche dazu geeignet und bestimmt ist. die aufgenommenen Bilder auszuwerten. Dabei ist die Auswerteeinrichtung bevorzugt auch dazu geeignet und bestimmt, einen Wert auszugeben, der für eine bestimmte Exzentrizität charakteristisch ist.

Dieser Wert kann dabei einer bestimmten Halteeinrichtung zugeordnet werden. In Abhängigkeit von diesem Wert können bevorzugt unterschiedliche Maßnahmen eingeleitet werden.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Erwärmen von Kunststoffvorformlingen (10) mit einer Transporteinrichtung (2), welche die Kunststoffvorformlinge entlang eines vorgegebenen Transportpfads (T) transportiert, wobei die Transporteinrichtung ein umlaufendes Transportmittel (20) aufweist, an dem eine Vielzahl von Halteeinrichtungen (22) zum Halten der zu erwärmenden Kunststoffvorformlinge (10) angeordnet ist,
**dadurch gekennzeichnet, dass**
die Vorrichtung (1) eine Inspektionseinrichtung (4) aufweist, welche dazu geeignet und bestimmt ist, nicht mit Kunststoffvorformlingen bestückte Halteeinrichtungen (22) zu inspizieren.

2. Vorrichtung (1) nach Anspruch 1,
**dadurch gekennzeichnet, dass**
die Inspektionseinrichtung (4) eine Bildaufnahmeeinrichtung (42) aufweist, welche dazu geeignet und bestimmt ist, ortsaufgelöste Bilder der Halteeinrichtungen (22) aufzunehmen.

3. Vorrichtung (1) nach wenigstens einem der vorangegangenen Ansprüche,
**dadurch gekennzeichnet, dass**
die Bildaufnahmeeinrichtung (42) unterhalb der Halteinrichtungen angeordnet ist.

4. Vorrichtung (1) nach wenigstens einem der vorangegangenen Ansprüche,
**dadurch gekennzeichnet, dass**
die Halteeinrichtungen Haltedorne sind, welche in die Mündungen der Kunststoffvorformlinge einführbar sind.

5. Vorrichtung (1) nach wenigstens einem der vorangegangenen Ansprüche,
**dadurch gekennzeichnet, dass**
die Inspektionseinrichtung (4) dazu geeignet ist, einen für eine Konzentrizität charakteristischen Wert der Halteeinrichtungen zu erfassen.

6. Vorrichtung (1) nach wenigstens einem der vorangegangenen Ansprüche,
**dadurch gekennzeichnet, dass**
die Inspektionseinrichtung (4) in einem Umlenkbereich der Transporteinrichtung angeordnet sind, in dem eine Bewegungsrichtung der Kunststoffvorformlinge umgekehrt wird.

7. Vorrichtung (1) nach wenigstens einem der vorangegangenen Ansprüche,
**dadurch gekennzeichnet, dass**
die Vorrichtung (1) eine Zuordnungseinrichtung aufweist, welche einem von einer Inspektionseinrichtung (4) aufgenommenen Bild genau eine bestimmte Halteeinrichtung (22) zuordnet.

8. Vorrichtung (1) nach wenigstens einem der vorangegangenen Ansprüche,
**dadurch gekennzeichnet, dass**
die Halteeinrichtungen eine Beschichtung zur Verbesserung der Bildaufnahme aufweisen.

9. Verfahren zum Erwärmen von Kunststoffvorformlingen (10) wobei eine Transporteinrichtung (2) die Kunststoffvorformlinge entlang eines vorgegebenen Transportpfads (T) transportiert, wobei die Transporteinrichtung (2) ein umlaufendes Transportmittel (20) aufweist, an dem eine Vielzahl von Halteeinrichtungen (22) zum Halten der zu erwärmenden Kunststoffvorformlinge (10) angeordnet ist,
**dadurch gekennzeichnet, dass**
eine Inspektionseinrichtung (4) vorgesehen ist, welche nicht mit Kunststoffvorformlingen bestückte Halteeinrichtungen (22) inspiziert und bevorzugt wenigstens einen Wert ausgibt, der für eine Konzentrizität der Halteeinrichtungen charakteristisch ist.

10. Verfahren nach Anspruch 9,
**dadurch gekennzeichnet, dass**
die Inspektion während einer Bewegung der Kunststoffvorformlinge mit einer gegenüber einem Arbeitsbetrieb reduzierten Transportgeschwindigkeit erfolgt.

11. Vorrichtung zur Herstellung von Kunststoffbehältnissen, mit einer Umformungseinrichtung, welche ein Blasrad mit einer Vielzahl von Umformungsstationen aufweist, wobei die Umformungsstationen jeweils eine Blasform innerhalb deren Kunststoffvorformlinge (10) zu den Kunststoffbehältnissen umgeformt werden und wenigstens ein Behandlungselement zum Behandeln und insbesondere zum Umformen der Kunststoffvorformlinge aufweisen,
**dadurch gekennzeichnet, dass**
die Vorrichtung eine Inspektionseinrichtung aufweist, welche dazu geeignet und bestimmt ist das wenigstens eine Behandlungselement der Umformungsstation zu inspizieren.

12. Vorrichtung nach Anspruch 11,
**dadurch gekennzeichnet, dass**
das wenigstens eine Behandlungselement aus einer Gruppe von Behandlungselementen ausgewählt ist, welche eine Reckstange, eine Blasdüse, eine Blasform, eine Bodenform und dergleichen enthält.

13. Vorrichtung nach Anspruch 11,
**dadurch gekennzeichnet, dass**
die Inspektionseinrichtung das Behandlungselement in einem Zustand inspiziert, in dem die Blasform geöffnet ist.

14. Vorrichtung nach Anspruch 11,
**dadurch gekennzeichnet, dass**
die Inspektionseinrichtung dazu geeignet und bestimmt ist, einen Wert zu ermitteln, der für einen Zustand des Behandlungselements charakteristisch ist.

15. Vorrichtung nach Anspruch 11,
**dadurch gekennzeichnet, dass**
die Inspektionseinrichtung dazu geeignet und bestimmt ist, einen Wert zu ermitteln der für einen Typ des Behandlungselements charakteristisch ist.
